# EUROPÄISCHE PATENTSCHRIFT

(11) **EP 1 697 644 B1**
(45) Veröffentlichungstag und Bekanntmachung des Hinweises auf die Patenterteilung: **26.11.2008**
(21) Anmeldenummer: 04803602.4
(22) Anmeldetag: 08.12.2004
(51) Int. Cl.: F16B 37/04

(54) **VORRICHTUNG ZUM VERBINDEN EINES TRÄGERTEILES MIT EINEM ANBAUTEIL**
DEVICE FOR CONNECTING A SUPPORT ELEMENT TO AN ADD-ON PIECE
DISPOSITIF DE CONNEXION D'UNE PIECE SUPPORT ET D'UNE PIECE RAPPORTEE

(30) Priorität: 17.12.2003 DE 10359110
(43) Veröffentlichungstag der Anmeldung: 06.09.2006
(73) Patentinhaber: A. RAYMOND ET CIE, 38000 Grenoble (FR); Ford-Werke GmbH, 50735 Köln (DE)
(72) Erfinder: MOTSCH, Uwe, 79618 Rheinfelden (DE); KOCH, Gerd, 6466KP Kerkrade (NL)
(74) Vertreter: Rüttgers, Joachim
(86) Internationale Anmeldenummer: PCT/EP2004/013921
(87) Internationale Veröffentlichungsnummer: WO 2005/059380

(56) Entgegenhaltungen:
- EP-A- 0 950 821
- EP-A- 1 026 415
- DE-A1- 1 923 321
- DE-C1- 19 722 778

## Beschreibung

Die Erfindung betrifft eine Vorrichtung zum Verbinden eines Trägerteiles mit einem Anbauteil mit einem in eine Ausnehmung des Trägerteiles einfügbaren Einsteckteil das wenigstens einen randseitig überstehenden Auflageabschnitt aufweist, mit einem Innenteil, das einen wenigstens abschnittsweise mit einer Gewindestruktur ausgebildeten Gewindebereich und wenigstens ein dem oder jedem Auflageabschnitt gegenüberliegenden Gegenstück aufweist, wobei das Innenteil in dem Einsteckteil axial verschiebbar gelagert ist, wobei das Innenteil als Mittelstück eine Stirnplatte aufweist, in deren Mitte der Gewindebereich mit der Gewindestruktur ausgebildet ist und wobei sich an die Stirnplatte zwei im wesentlichen parallel zueinander ausgerichtete Randstege des Innenteiles anschließen, an denen die Gegenstücke ausgebildet sind. Eine derartige Vorrichtung ist aus der EP-A- 0 950 821 bekannt.

Eine weitere Vorrichtung ist aus der DE-OS 19 23 321 bekannt. Bei der vorbekannten Vorrichtung ist ein käfigartiges Einsteckteil vorhanden, das zwei randseitig überstehende Auflageabschnitte aufweist, die bei Einstecken des Einsteckteiles in eine Ausnehmung eines Trägerteiles in Einsteckrichtung außenseitig des Trägerteiles am Rand der Ausnehmung zum Liegen kommen. Innenseitig jedes Auflageabschnittes ist jeweils ein Randsteg vorhanden, an dem ein federndes, nach außen abstehendes Gegenstück ausgebildet ist, das dem Auflageabschnitt gegenüberliegt. Die vorbekannte Vorrichtung verfügt weiterhin über einen Mittelsteg, der die Randstege an den den Auflageabschnitten gegenüberliegenden Enden verbindet. Im Mittenbereich des Mittelsteges ist ein Gewindebereich ausgebildet, der über eine Gewindestruktur verfügt, in den eine durch ein an dem Trägerteil zu befestigendes Anbauteil durchgreifende Schraube einschraubbar ist. Bei bestimmungsgemäßer Verwendung der vorbekannten Vorrichtung wird das Einsteckteil durch die Ausnehmung des Trägerteiles durchgesteckt, bis die Auflageabschnitte an der Außenseite des Trägerteiles anliegen und die Gegenstücke nach Einfedern beim Durchführen durch die Ausnehmung wieder den Randbereich des Trägerteiles um die Ausnehmung hintergreifend nach außen abstehen.

In dieser Anordnung ist das Einsteckteil in dem Trägerteil verankert, und ein Anbauteil, durch das eine Schraube durchgreift, ist mit dem Trägerteil verbindbar, indem die Schraube in die Gewindestruktur eingeschraubt wird, bis das Anbauteil an den Auflageabschnitten des Einsteckteiles anliegt, wobei die Gegenstücke das Einsteckteil gegen Herausziehen sichern.

Der Erfindung liegt die Aufgabe zugrunde, eine Vorrichtung der eingangs genannten Art anzugeben, in der ein Anbauteil durch Eindrehen einer Schraube in einem Abstand von einem Trägerteil mit dem Trägerteil verbindbar ist.

Diese Aufgabe wird bei einer Vorrichtung der eingangs genannten Art erfindungsgemäß dadurch gelöst, dass das Einsteckteil über einen Widerlagerbereich verfügt, der mit einer in den Gewindebereich eingeschraubten Schraube in Eingriff kommt und für die Schraube einen Anschlag bildet, so dass sich das Innenteil bei Eindrehen der Schraube in die Gewindestruktur entgegen der Einführrichtung der Schraube bewegt, bis das oder jedes Gegenstück an der dem oder jedem Auflageabschnitt gegenüberliegenden Seite des Randbereiches der das Einsteckteil aufnehmenden Ausnehmung anliegt.

Dadurch, dass die Vorrichtung ein axial in dem Einsteckteil verschiebbares Innenteil aufweist, an dem der Gewindebereich und das oder jedes Gegenstück ausgebildet sind, und dass das Einsteckteil einen für die Schraube einen Anschlag bildenden Widerlagerbereich aufweist, bewegt sich das Innenteil bei Eindrehen einer Schraube in die Gewindestruktur entgegen der Einführrichtung der Schraube, bis das oder jedes Gegenstück an der dem oder jedem Auflageabschnitt gegenüberliegenden Seite des Randbereiches der das Einsteckteil aufnehmenden Ausnehmung anliegt. In dieser Anordnung der Vorrichtung ist das Anbauteil in einem Abstand von dem Trägerteil angeordnet und mit diesem fest verbunden.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
Fig. 1 in einer perspektivischen Darstellung ein bevorzugtes Ausführungsbeispiel der Erfindung mit einem Einsteckteil und einem Innenteil, die jeweils aus Blechstreifen geformt sind,
Fig. 2 in einer Seitenansicht das Ausführungsbeispiel gemäß Fig. 1 in einer Einbausituation und
Fig. 3 in einer gegenüber der Darstellung gemäß Fig. 2 um 90 Grad gedrehten vergrößerten Seitenansicht das Ausführungsbeispiel gemäß Fig. 1 in der Einbausituation.

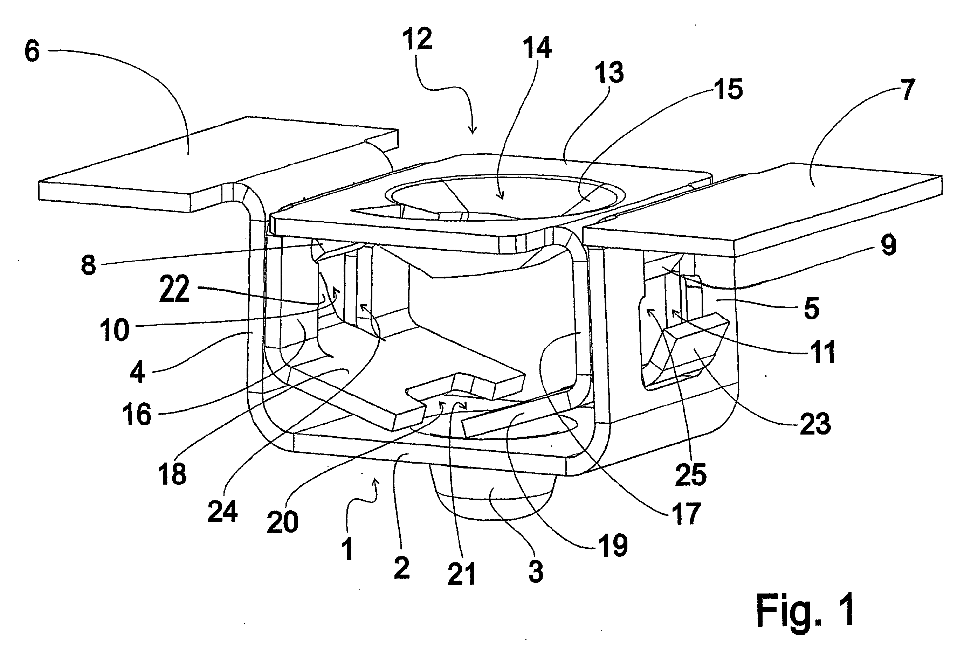

Fig. 1 zeigt in einer perspektivischen Darstellung ein bevorzugtes Ausführungsbeispiel einer erfindungsgemäßen Vorrichtung. Das Ausführungsbeispiel gemäß Fig. 1 verfügt über ein aus einem vorgestanzten Blechstreifen geformtes Einsteckteil 1 mit einem Mittelsteg 2, in dessen Mittenbereich als Vertiefung und Widerlagerbereich für eine in Fig. 1 nicht dargestellte Schraube eine Widerlagersenke 3 ausgebildet ist. Beidseitig des Mittelsteges 2 sind durch im wesentlichen rechtwinkliges Umbiegen des Blechstreifens in die jeweils gleiche Richtung ein erster Randsteg 4 und ein zweiter Randsteg 5 ausgebildet, die parallel zueinander ausgerichtet sind. Durch erneutes, im wesentlichen rechtwinkliges Umbiegen der freien Ende des Blechstreifens nach außen sind als Auflageabschnitte eine erste Auflagezunge 6 und eine zweite Auflagezunge 7 ausgebildet, die im wesentlichen in einer Ebene liegen.

An den dem Mittelsteg 2 gegenüberliegenden Enden der Randstege 4, 5 sind eine erste Anschlagsnase 8 und eine zweite Anschlagsnase 9 ausgeformt, die abgewinkelt aufeinander zu und in Richtung des Mittelsteges 2 nach innen weisend ausgerichtet sind. In jedem Randsteg 4, 5 ist eine erste Randausnehmung 10 beziehungsweise eine zweite Randausnehmung 11 ausgebildet, die sich in Längsrichtung jeweils von den Anschlagsnasen 8, 9 bis in die Nähe des Mittelsteges 2 erstrecken.

Weiterhin verfügt die erfindungsgemäße Vorrichtung gemäß dem Ausführungsbeispiel von Fig. 1 über ein ebenfalls aus einem vorgestanzten Blechstreifen geformtes Innenteil 12. Das Innenteil 12 weist als Mittelteil eine Stirnplatte 13 auf, in deren Mitte ein Gewindebereich 14 mit einer durch auf einer Spirallinie liegenden Kanten ausgebildeten Gewindestruktur 15 vorhanden ist. An einander gegenüberliegenden Randseiten der Stirnplatte 13 sind durch im wesentlichen rechtwinkliges Umbiegen an dem Innenteil 12 ein erster Randsteg 16 beziehungsweise ein zweiter Randsteg 17 ausgebildet, deren Außenseiten jeweils den zugeordneten Randstegen 4, 5 des Einsteckteiles 1 zugewandt sind. Weiterhin verfügt das Innenteil 12 über eine erste Innenzunge 18 und eine zweite Innenzunge 19, die sich von den Randstegen 16, 17 aufeinander zu weisend nach innen erstrecken und randseitig mit einer ersten Zungenausnehmung 20 beziehungsweise einer zweiten Zungenausnehmung 21 ausgebildet sind.

Im Übergangsbereich zwischen den Randstegen 16, 17 des Innenteiles 12 und den Zungenausnehmungen 20, 21 setzen als Gegenstücke eine erste Gegennase 22 beziehungsweise eine zweite Gegennase 23 an, die unter Freigabe einer ersten Randausnehmung 24 beziehungsweise einer zweiten Randausnehmung 25 in den Randstegen 16, 17 des Innenteiles 12 nach außen aufgebogen sind.

Das Einsteckteil 1 und das Innenteil 12 sind so zueinander angeordnet, dass die Anschlagsnasen 8, 9 des Einsteckteiles 1 in die Randausnehmungen 24, 25 des Innenteiles 12 und die Gegennasen 22, 23 des Innenteiles 12 in die Randausnehmungen 10, 11 des Einsteckteiles 1 eingreifen. Dadurch ist das Innenteil 12 in dem Einsteckteil 1 verliersicher und axial verschiebbar gehalten.

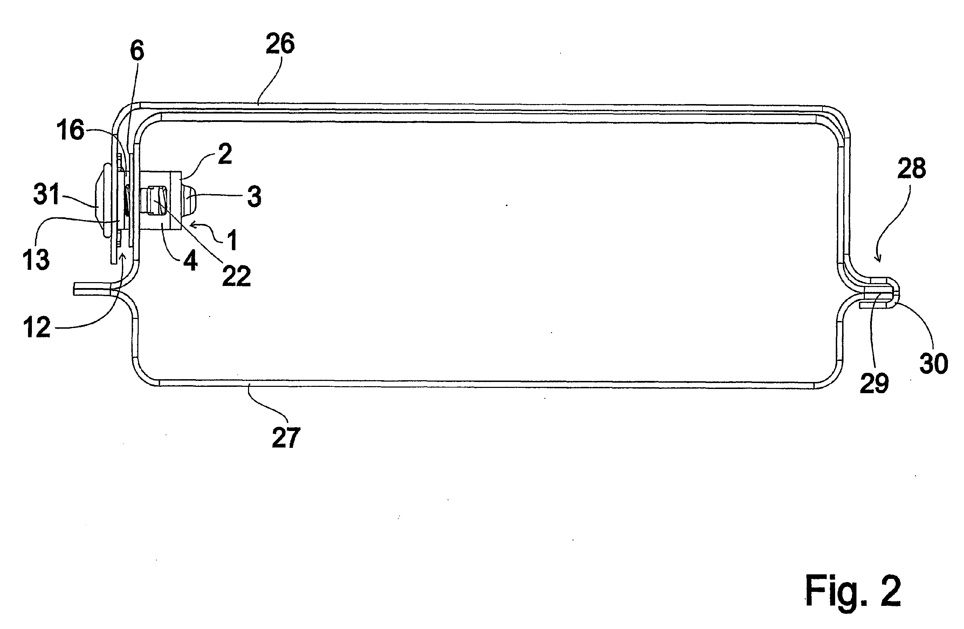

Fig. 2 zeigt in einer Seitenansicht das Ausführungsbeispiel gemäß Fig. 1 in einer Einbausituation zum Verbinden eines Anbauteiles 26 mit einem Trägerteil 27, die an einer der Einbauposition der erfindungsgemäßen Vorrichtung gegenüberliegenden Seite über eine lose Gelenkverbindung 28 miteinander verbunden sind. Die Gelenkverbindung 28 ist durch einen an dem Trägerteil 27 ausgebildeten Steg 29 und eine an einem freien Ende des Anbauteiles 26 ausgebildete Umbiegung 30 bewerkstelligt, wobei es für eine spielfreie Verbindung zwischen dem Anbauteil 26 und dem Trägerteil 27 erforderlich ist, dass die Umbiegung 30 permanent gegen den Steg 29 angedrückt wird.

Das Einsteckteil 1 der erfindungsgemäßen Vorrichtung ist hierzu in eine Ausnehmung des Trägerteiles 27 eingefügt, wobei die Auflagezungen 6, 7 an der dem Anbauteil 26 zugewandten Seite des Trägerteiles 27 anliegen. Durch Einschrauben einer durch das Anbauteil 26 durchgreifenden Schraube 31 in die in der Stirnplatte 13 des Innenteiles 12 ausgebildeten Gewindestruktur 15 bis zum Eingriff des freien Endes der Schraube 31 in die Widerlagersenke 3 und weiteres Anziehen der Schraube 31 bis zum Anliegen der Gegennasen 22, 23 an der dem Anbauteil 26 abgewandten Seite des Trägerteiles 27 wird das Anbauteil 26 im Bereich der Einbauposition der erfindungsgemäßen Vorrichtung von dem Trägerteil 27 bis zu einem Maximalabstand in einer Endstellung abgehoben, und dadurch wird die Gelenkverbindung 28 unter Zugspannung gesetzt.

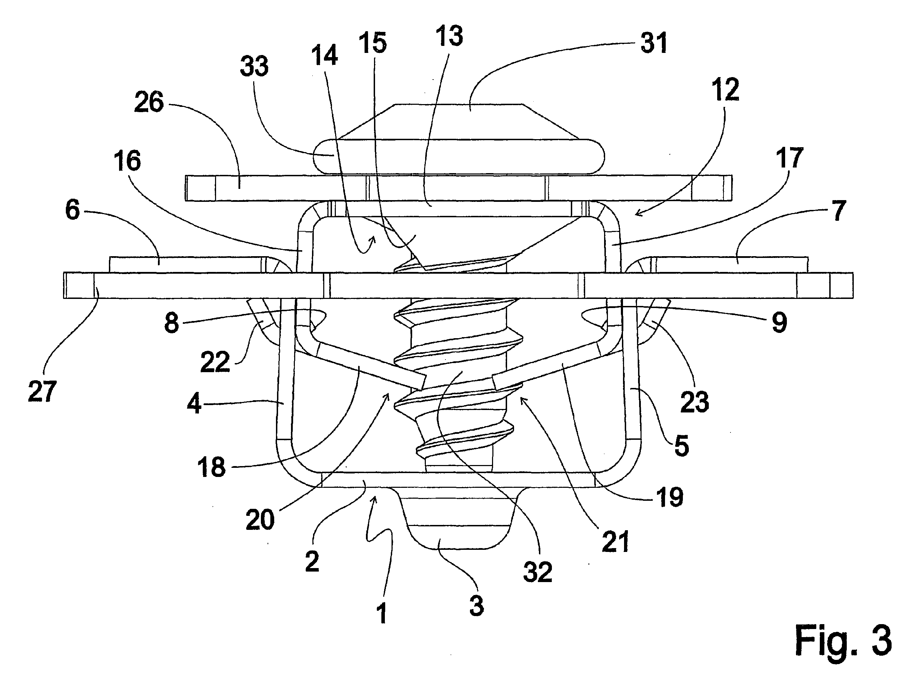

Fig. 3 zeigt in einer gegenüber der Darstellung gemäß Fig. 2 um 90 Grad gedrehten vergrößerten Seitenansicht das Ausführungsbeispiel gemäß Fig. 1 in der Einbausituation. Aus Fig. 3 ist ersichtlich, dass die Innenzungen 18, 19 einen Gewindeschaft 32 der Schraube 31 entsprechend der Tiefe der Zungenausnehmungen 20, 21 teilweise umschließen und dadurch die Schraube 31 beim Eindrehen in Richtung der Widerlagersenke 3 führen, bis das freie Ende des Gewindeschaftes 32 in die in Einführrichtung einen Anschlag bildende Widerlagersenke 3 eingreift. Weiterhin ist Fig. 3 zu entnehmen, dass bei aufeinander abgestimmter Länge des Gewindeschaftes 32 der Schraube 31 sowie der relevanten Dimensionen des Einsteckteiles 1 sowie des Innenteiles 12 das Trägerteil 27 zwischen den Auflagezungen 6, 7 sowie den Gegennasen 22, 23 und das Anbauteil 27 zwischen einem Kopf 33 der Schraube 31 und der Stirnplatte 13 des Innenteiles 12 eingeklemmt und damit fest miteinander verbunden sind.

## Patentansprüche

1. Vorrichtung zum Verbinden eines Trägerteiles (27) mit einem Anbauteil (26) mit einem in eine Ausnehmung des Trägerteiles (27) einfügbaren Einsteckteil (1), das wenigstens einen randseitig überstehenden Auflageabschnitt (6, 7) aufweist, mit einem Innenteil (12), das einen wenigstens abschnittsweise mit einer Gewindestruktur ausgebildeten Gewindebereich (14) und wenigstens ein dem oder jedem Auflageabschnitt (6, 7) gegenüberliegenden Gegenstück (22, 23) aufweist, wobei das Innenteil (12) in dem Einsteckteil (1) axial verschiebbar gelagert ist, wobei das Innenteil (12) als Mittelstück eine Stirnplatte (13) aufweist, in deren Mitte der Gewindebereich (14) mit der Gewindestruktur (15) ausgebildet ist und wobei sich an die Stirnplatte (13) zwei im wesentlichen parallel zueinander ausgerichtete Randstege (16, 17) des Innenteiles (12) anschließen, an denen die Gegenstücke (22, 23) ausgebildet sind, **dadurch gekennzeichnet, dass** das Einsteckteil (1) über einen Widerlagerbereich (3) verfügt, der mit einer in den Gewindebereich (14) eingeschraubten Schraube (31) in Eingriff kommt und für die Schraube (31) einen Anschlag bildet, so dass sich das Innenteil (12) bei Eindrehen der Schraube (31) in die Gewindestruktur (15) entgegen der Einführrichtung der Schraube (31) bewegt, bis das oder jedes Gegenstück (22, 23) an der dem oder jedem Auflageabschnitt (6, 7) gegenüberliegenden Seite des Randbereiches der das Einsteckteil (1) aufnehmenden Ausnehmung anliegt.

2. Vorrichtung nach Anspruch 1, **dadurch gekennzeichnet, dass** sich an die Randstege (16, 17) des Innenteiles (12) jeweils eine Innenzunge (18, 19) anschließt, die zueinander ausgerichtet sind und bis an den Widerlagerbereich (3) heranreichen.

3. Vorrichtung nach Anspruch 1 oder Anspruch 2, **dadurch gekennzeichnet, dass** das Einsteckteil (1) aus einem vorgestanzten Blechstreifen geformt ist und einen Mittelsteg (2) und zwei sich randseitig an den Mittelsteg (2) anschließende sowie im wesentlichen parallel zueinander ausgerichtete Randstege (4, 5) aufweist, an die sich die Auflageabschnitte (6, 7) anschließen.

4. Vorrichtung nach Anspruch 3, **dadurch gekennzeichnet, dass** die Randstege (4, 5) des Einsteckteiles (1) jeweils mit einer Anschlagsnase (8, 9) ausgebildet sind, die aufeinander zu weisend und in Richtung des Mittelsteges (2) ausgerichtet sind.

5. Vorrichtung nach Anspruch 3 oder Anspruch 4, **dadurch gekennzeichnet, dass** die Randstege (4, 5) des Einsteckteiles (1) in Längsrichtung ausgerichtete Randausnehmungen (10, 11) aufweisen.

6. Vorrichtung nach einem der Ansprüche 1 bis 5, **dadurch gekennzeichnet, dass** das Innenteil (12) aus einem vorgestanzten Blechstreifen geformt ist.

## Claims

1. Device for connecting a supporting part (27) to an add-on part (26) comprising an insert part (1) which is introducible into a recess of the support part (27), said support part having at least one contact section (6, 7) which overhangs at the edges, with an inner part (12) which comprises a thread region (14) configured at least partially with a thread structure and at least one counterpart (22, 23) opposing the, or each, contact section (6, 7), wherein the inner part (12) is mounted axially displaceable in the insert part (1), wherein the inner part (12) has as its central member a face plate (13) in the centre of which the thread region (14) is configured with the thread structure (15) and wherein two edge webs (16, 17) of the inner part (12) oriented substantially parallel to one another adjoin the face plate (13), the counterparts (22, 23) being formed on the edge webs (16, 17), **characterised in that** the insert part (1) comprises an abutment region (3) which comes into engagement with a screw (31) screwed into the thread region (14) and comprises a stop for the screw (31) so that the inner part (12) moves against the inserting direction of the screw (31) as the screw (31) is screwed into the thread structure (15), or until the, or each, counterpart (22, 23) lies against the side of the edge region of the recess accommodating the insert part (1) opposing the, or each, contact section (6, 7).

2. Device according to claim 1, **characterised in that** adjoining each of the edge webs (16, 17) of the inner part (12) is an inner tongue (18, 19), oriented towards one another and reaching as far as the abutment region (3).

3. Device according to claim 1 or claim 2, **characterised in that** the insert part (1) is formed from a pre-stamped sheet metal strip and a central web (2) and has two edge webs (4, 5) which adjoin the central web (2) at the edge and are oriented substantially parallel to one another, and are adjoined by the contact sections (6, 7).

4. Device according to claim 3, **characterised in that** the edge webs (4, 5) of the insert part (1) are each configured with a stop nose (8, 9) said stop noses being oriented facing towards one another and in the direction towards the central web (2).

5. Device according to claim 3 or claim 4, **characterised in that** the edge webs (4, 5) of the insert part (1) have edge recesses (10, 11) oriented in the longitudinal direction.

6. Device according to one of the claims 1 to 5, **characterised in that** the inner part (12) is formed from a pre-stamped sheet metal strip.

## Revendications

1. Dispositif d'assemblage d'un élément formant support (27) avec un élément rapporté (26), comprenant un élément d'emmanchement mâle (1) destiné à être inséré dans une ouverture ménagée dans l'élément formant support (27), qui comporte au moins une portion d'assise (6, 7) faisant saillie au-dessus de la portion de rive, comprenant un élément intérieur (12) qui comporte une portion de vissage (14) munie, au moins en un endroit, d'une structure formant amorce de filetage, et au moins un segment conjugué (22, 23) disposé à l'opposé de la ou de chaque portion d'assise (6, 7), l'élément intérieur (12) étant en l'occurrence monté dans l'élément d'emmanchement mâle de manière à pouvoir se déplacer en translation dans le plan axial, l'élément intérieur (12) comportant en tant qu'élément intermédiaire une plaque antérieure (13), au centre de laquelle la portion de vissage (14) avec sa structure formant amorce de filetage (15) est définie, et deux barrettes entretoises de rive (16, 17) de l'élément intérieur (12), sensiblement parallèles l'une par rapport à l'autre, venant se raccorder à la plaque antérieure (13), barrettes qui portent les segments conjugués (22, 23), **caractérisé en ce que** l'élément d'emmanchement mâle (1) comporte une portion formant butée (3), qui vient en prise d'engagement avec une vis (31) vissée dans la portion de vissage (14) et qui constitue une butée de fin de course pour la vis (31), ce qui fait que, lorsque l'on visse la vis (31) dans la structure formant amorce de filetage (15), l'élément intérieur (12) se déplace dans le sens contraire de celui de l'introduction de la vis (31), jusqu'à ce que le ou les segments conjugués (22, 23) viennent en contact d'application contre la face de la portion de rive opposée à la ou à chaque portion d'assise (6, 7) de l'ouverture d'introduction de l'élément d'emmanchement mâle (1).

2. Dispositif selon la revendication 1, **caractérisé en ce qu'**une languette intérieure (18, 19) est respectivement disposée attenante à chaque barrette entretoise de rive (16, 17), languettes qui sont orientées l'une vers l'autre et qui arrivent jusque dans la portion formant butée (3).

3. Dispositif selon la revendication 1 ou la revendication 2, **caractérisé en ce que** l'élément d'emmanchement mâle (1) est réalisé à partir d'un flan en tôle préalablement découpé à la presse et **en ce qu'**il se compose d'une barrette centrale (2) et de deux barrettes latérales (4, 5) disposées de part et d'autre attenantes à la barrette centrale (2) et orientées sensiblement parallèlement l'une par rapport à l'autre, auxquelles viennent se raccorder les portions d'assise (6, 7).

4. Dispositif selon la revendication 3, **caractérisé en ce que** les barrettes latérales (4, 5) de l'élément d'emmanchement mâle (1) sont respectivement munies d'un ergot de butée (8, 9), qui sont orientés l'un vers l'autre et dans la direction de la barrette centrale (2).

5. Dispositif selon la revendication 3 ou la revendication 4, **caractérisé en ce que** les barrettes latérales (4, 5) de l'élément d'emmanchement mâle (1) comportent des ouvertures de rive (10, 11) orientées dans le sens longitudinal.

6. Dispositif selon l'une des revendications 1 à 5, **caractérisé en ce que** l'élément intérieur (12) est réalisé à partir d'un flan en tôle préalablement découpé à la presse.
